# EUROPEAN PATENT SPECIFICATION

(11) **EP 1 785 350 B1**
(45) Date of publication and mention of the grant of the patent: **02.01.2013**
(21) Application number: 06124163.4
(22) Date of filing: 15.11.2006
(51) Int. Cl.: B64F 5/00, B66F 7/14, B66F 7/22

(54) **Apparatus for manipulating heavy loads**
Vorrichtung für die Handhabung schwerer Lasten
Dispositif pour manipuler des charges lourdes

(30) Priority: 15.11.2005 US 274036
(43) Date of publication of application: 16.05.2007
(73) Proprietor: The Boeing Company, Chicago IL 66066-2016 (US)
(72) Inventor: Groves, Oliver J., Freeland, WA 98249 (US); Heilman, Gary F., Everett, WA 98208 (US); Harisson, Charles D., Arlington, WA 98223 (US); Taylor, Bart M., Arlington, WA 98223 (US); Chung, Se Y., Edmonds, WA 98026 (US); Kim, Tae H., Mapple Valley, WA 98038 (US); Koyfman, Gregory, Bellevue, WA 98006 (US); Oare, Edward D., Everett, WA 98208-8964 (US); Virnig, Jacob D., Woodinville, WA 98077 (US); Konen, Michael H., Marysville, WA 98270 (US)
(74) Representative: Hale, Peter

(56) References cited:
- EP-A1- 1 378 448
- FR-A1- 2 848 528
- JP-A- 3 211 195
- US-B1- 6 390 762

## Description

This invention relates to apparatus for lifting and manipulating heavy loads in general, and more particularly but not exclusively, to a loader for the main landing gear of a large aircraft.

Modern large aircraft, such as the Boeing 777, are typically assembled on a moving assembly line, sometimes referred to simply as a "Boeing Production System "(BPS)". Moving line assembly requires that the aircraft's main landing gear (MLG), each of which may weigh more than 14,000 lbs. (6.35 tonnes), be installed while the weight of the aircraft is supported on jacks, with the belly of its fuselage disposed 106 inches (2.7m) or more above the floor. Moreover, repairs or maintenance of large aircraft in the field often must be effected in an actual "flight line" environment, necessitating the removal and installation of large MLG at heights of up to 154 inches (3.9m) above the tarmac, and additionally, in a potentially more hazardous environment, *e.g*., an Underwriters Laboratories ("UL") "Class 1, Division 1" (fueled aircraft) environment. The prior art methods for installing large MLG are typically accomplished on the flight line or in a customer's hangar. Several examples of specialized apparatus adapted for effecting such heavy equipment lifts and manipulations can be found in the patent art, *e.g*., in US5,460,474; US6,390,762; and US6,485,247.

One such prior art method and associated apparatus are those developed for loading the MLG of the Boeing 747 aircraft. However, it should be noted that the 747 MLG loader is not capable of supporting the increased weight of more recent, larger aircraft, *e.g*., the Boeing 777, and is therefore incapable of installing the 777 MLG in either a moving line or a flight line environment. This prior art MLG loader comprises three separate towers having associated floor plates that are installed concentrically to the MLG. The equipment necessitates that all six MLG wheels be removed from their respective axles, and that at least three protective sleeves be installed on the bare axles, two on the outboard side and one at the opposite inboard side on the center axle. The protective sleeves are in turn attached to three, six-ton (5.4 tonne) lever hoists located on respective ones of the three towers. The lever chain hoists are attached to the plates and respective hoist chains are attached between the tower and the MLG, each of which is then independently tensioned or relaxed in the desired direction to align the upper end of the strut of the MLG into position inside the wheel well of the aircraft. The foregoing sequence must be accomplished prior to either the installation or the removal of a MLG from an aircraft, and in either case, the aircraft must first be fully supported on jacks or other supports. The disadvantage of the prior art method and apparatus is that they take substantial setup time and manual labor, including disassembly of the MLG wheels and the manual manipulation of the MLG with multiple, independent lever chain hoists, and with the subsequent need to reassemble three of the six wheels on the gear and disassemble the equipment after the MLG has been installed.

French Patent Application Publication No. 2848528 A1 discloses a device for placing a landing gear in the structure of an aircraft during its construction. Three cables descending from hoists are used to raise the landing gear upwards to enable it to be installed.

Japanese Patent Application Publication No. 03211195 discloses a wheeled leg conveyor and exchanger for an aircraft.

European Patent Application EP 1378448 A1 discloses a device for transporting and positioning components such as aeroplane engines, undercarriages or aerofoils.

Accordingly, there is a long-felt but as yet unsatisfied need in the industry for a loader that can install a large MLG into or remove it from an aircraft in either a moving line or a flight line environment in an improved way, e.g. one that is controllable, safe, accurate, and/or reliable, and in a substantially reduced amount of time.

An aspect of the present invention is defined in the accompanying independent claims. Some preferred features are recited in the dependent claims.

In accordance with the exemplary embodiments described herein, a method and apparatus for loading the MLG of a large aircraft into or from the wheel wells of the aircraft in either a moving assembly line or a flight line environment in an improved way, e.g. a safer, more reliable and/or accurate manner, and in a substantially reduced amount of time than those of the prior art.

In one advantageous exemplary embodiment, the MLG loader may comprise a U-shaped support frame having opposing symmetrical portions disposed on opposite sides of a sagittal plane extending through the MLG, and a fixture supported on the support frame and coupled to the MLG such that both axial forces and turning moments applied to the fixture by the loader are coupled through the fixture to the MLG. The fixture may comprise, for example, an MLG shipping fixture that is coupled to the tires of the wheels on the MLG truck. Means may be provided for both controllably translating and rotating the fixture in both a horizontal plane and the sagittal plane of the MLG.

Means for controllably translating the fixture in the sagittal plane include a pair of opposing slide mechanisms respectively coupled to an opposite side of the fixture and supported on a corresponding one of the opposing support frame side portions for simultaneous, coextensive sliding movement relative to the support frame and parallel to the sagittal plane, and means are provided, *e.g*., a ball-screw or hydraulic linear actuator, for urging the slide mechanisms in such movement.

Means for controllably rotating the fixture in the sagittal plane include first and second pairs of opposing vertical jacks, each pair having a jack supported on a corresponding one of the opposing support frame side portions, the first pair being fixed relative to the support frame and the second pair being axially moveable on the support frame relative to the first pair. Means are provided for rotatably coupling opposite ends of each of the slide mechanisms to an output end of a corresponding one of the jacks of each of the first and second pairs of jacks, and means are provided for controllably raising and lowering the output ends of the jacks of each opposing pair of jacks simultaneously, coextensively and independently of those of the other pair, such that the slide mechanisms, and hence, the fixture and MLG, are caused to rotate in the sagittal plane as a result thereof. The raising and lowering means of the jacks can also comprise a ball-screw or a hydraulic linear actuator.

In an embodiment of the loader, means are also provided for controllably rotating and translating the fixture in a horizontal plane. These means can comprise a drive mechanism coupled to the support frame, in which the drive mechanism includes a plurality of synchronized, steerable wheels, each equipped with an independently controllable servo drive mechanism. In this embodiment, all operations of the loader, including movement of the MLG in both the horizontal and sagittal planes, may be controlled by an operator remotely from the MLG using, *e.g*., a control pendant.

Optionally, the loader can include an electromechanical or a hydraulic linear actuator coupled between the strut and truck of the MLG which is operative to rotate the strut about a central axis of the strut and relative to the truck, for fine adjustments of the upper end of the strut relative to associated structure located in the wheel well of the aircraft.

In one advantageous embodiment, the loader can include a portable power supply, *e.g*., one or more battery or generator carts coupled to the loader, for powering the loader independently of fixed power sources.

A method for loading a MLG of an aircraft using the novel loader comprises coupling the fixture to the MLG and positioning the opposing side portions of the support frame on opposite sides of the fixture. The side portions of the support frame are then brought together and locked to each other such that the slide mechanisms of the loader respectively engage opposite sides of the MLG coupling fixture. When the MLG has thus been captured by the loader, the MLG can be easily translated and rotated in the horizontal plane using the loader drive mechanism so as to align it appropriately with the wheel well of the aircraft, then controllably translated and rotated in the sagittal plane of the MLG using the jacks and slider mechanisms until the upper end of the strut of the MLG enters the wheel well and is correctly aligned with associated engaging structure located in the wheel well.

A better understanding of the above and many other features and advantages of the methods and apparatus of the present invention may be obtained from a consideration of the detailed description of the exemplary embodiments thereof below, particularly if such consideration is made in conjunction with the appended drawings, wherein like reference numerals are used to identify like elements illustrated in one or more of the figures therein:
Fig. 1 is a partial left side elevation view of a large aircraft situated on a horizontal surface, such as a hangar floor or tarmac and supported by a nose gear and a left main landing gear ("MLG");
Fig. 2 is a partial schematic elevation view of the aircraft and MLG of Fig. 1, showing a strut of the MLG disposed in a generally horizontal orientation and aligned with a wheel well of the aircraft, preparatory to being loaded into the wheel well;
Fig. 3 is a view similar to Fig. 2, showing the MLG rotated through an angle ⊝_{y} in a sagittal plane of the MLG;
Fig. 4 is a view similar to Figs. 2 and 3, showing the MLG in a generally upright, loaded position, with an upper end of the strut of the MLG disposed in the wheel well of the aircraft;
Fig. 5 is a perspective view of an MLG coupling fixture used by an exemplary embodiment of a loader to apply both axial and turning forces to the MLG;
Fig. 6 is a perspective view of an exemplary embodiment of a MLG loader, showing symmetrical right- and left-hand portions thereof coupled to each other across the sagittal plane of the MLG, with the fixture of Fig. 5 coupled between a pair of slide mechanisms of the loader for translational and rotational movement of the MLG in the sagittal plane, and wherein the MLG and surrounding work platforms have been omitted for clarity;
Fig. 7 is a perspective view of a left side half-portion of the exemplary loader of Fig. 6;
Fig. 8 is a top plan view of the exemplary loader of Fig. 6, showing the MLG disposed between the slide mechanisms of the loader, and wherein the coupling fixture and surrounding work platforms have been omitted for clarity;
Fig. 9 is a front-and-side perspective view of the exemplary loader, showing the MLG rotated in the sagittal plane to a nearly upright position by the loader, and with an elevated work platform of the loader surrounding the MLG;
Fig. 10 is a right side elevation of the loader, showing the MLG rotated in the sagittal plane to an angle of about a 45 degrees relative to the horizontal by the loader; and
Fig. 11 is a partial front perspective view of the MLG, showing an optional MLG strut rotating mechanism of the loader.

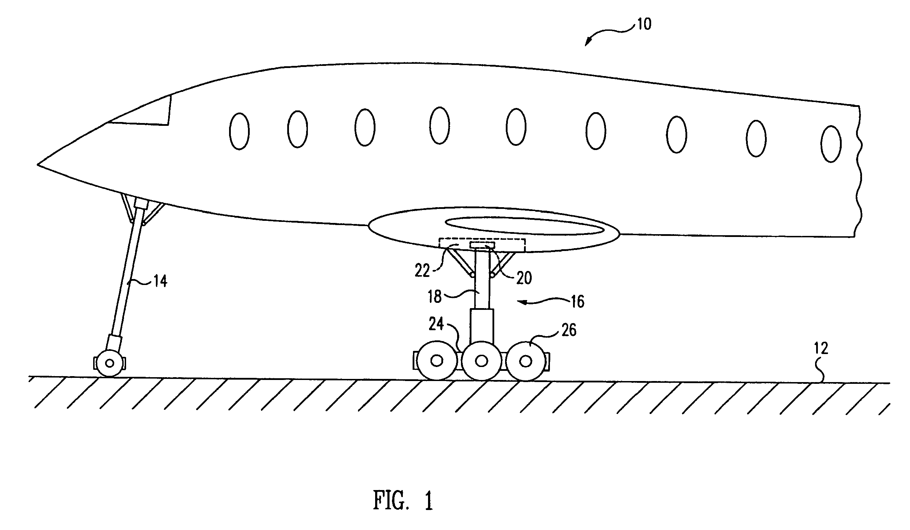

Figure 1 is a left side partial elevation view of a large aircraft 10 situated on a generally horizontal surface, such as a hangar floor or tarmac 12 and supported thereon by a nose gear 14 and a left main landing gear ("MLG") 16 of the aircraft. In the particular embodiment of aircraft and MLG illustrated, the MLG comprises an elongate strut 18 having an upper end 20 extending into a wheel well 22 of the aircraft, where it is coupled to associated structure adapted to support the aircraft on the MLG and to extend the MLG from and retract it completely into the wheel well during takeoff, flight and landing operations. The MLG typically further includes a truck 24 having a plurality of wheels 26 rotatably mounted thereon. In a typical embodiment, the MLG may include six wheels, can weigh more than 7 tons (6.4 tonnes), and measure more than 154 inches (3.9m) in length.

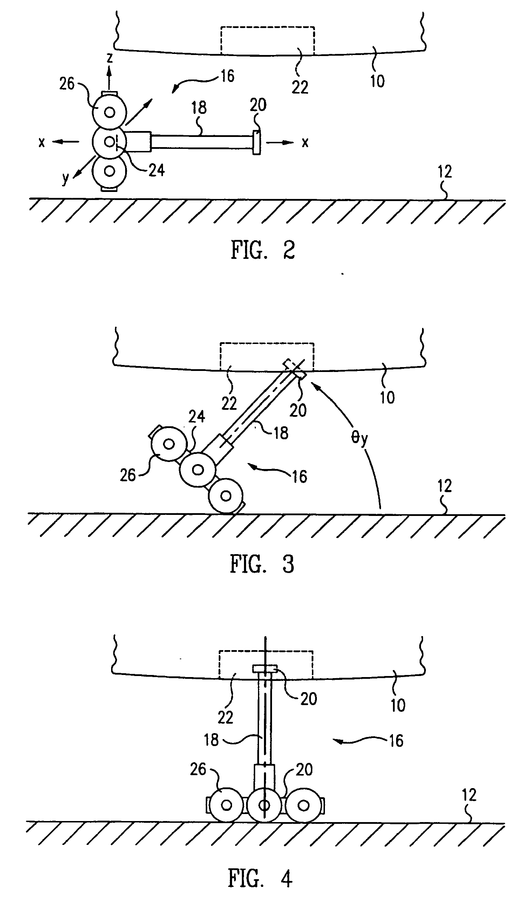

Figs. 2-4 schematically illustrate the sequential steps involved in one method of loading, *i.e*., installing, the MLG 16 into the aircraft 10, and particularly, insertion of the upper end 20 of the elongate strut 18 thereof into the wheel well 22 of the aircraft, wherein it should be understood that during the entire procedure, the weight of aircraft is supported on a plurality of jacks or other supporting mechanisms (not illustrated), and that the procedure for unloading, or uninstalling the MLG involves a reversal of the procedural steps illustrated. As shown in Fig. 2, the loading procedure begins with the strut disposed generally horizontally and the truck disposed generally vertically, with the strut aligned with the wheel well both longitudinally, *i.e*., along the x-axis shown, and transversely, *i.e.*, along the y-axis, such that a sagittal plane extends commonly through both the MLG and the wheel well.

In Fig. 3, the MLG 16 is shown having been rotated in the sagittal plane through an angular displacement ⊝_{y}, such that the upper end 20 of the MLG strut 18 is partially disposed in the wheel well 22 of the aircraft 10, and in Fig. 4, the MLG is shown fully rotated to a substantially upright orientation, in which the upper end of the strut can be coupled to associated MLG structure (not illustrated) within the wheel well. Thus, it will be understood that, to effect the foregoing procedures effectively in connection with a relatively large, heavy MLG, the MLG loader of at least this embodiment must be capable of first grasping and holding the MLG, and then manipulating it controllably, safely, and accurately in at least four degrees of movement, *i.e.*, along three orthogonal axes of translation, two horizontal (*i.e.*, "x," or fore-and-aft, and "y," or transverse) and one vertical (*i.e*., "z"), and in at least one degree of rotational movement within the sagittal plane of the MLG (*i.e*., "⊝_{y}").

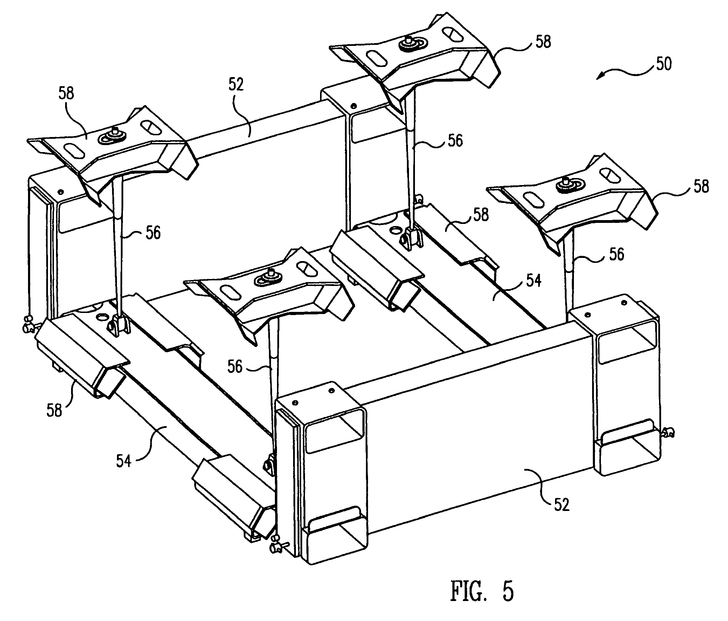

An advantageous tool 50 for grasping and holding the MLG 16 for such manipulation by a loader is illustrated in the perspective view of Fig. 5, and comprises a shipping fixture that couples to the tires on the wheels 26 of the truck 24 of the MLG. The fixture comprises a pair of longitudinal beams 52 having ends coupled to corresponding ends of a pair of transverse beams 54. Each of four vertical rods 56 is slidably moveable on the transverse beams and mounts a pair of spaced-apart, adjustable spatulate fingers 58 adapted to resiliently clamp onto the aft end of the front, or leading pair of tires, both the leading and aft ends of the middle pair of tires, and the leading ends of the aft or rearmost pair of tires of the truck, in a strong, clamping attachment. Because the center of gravity of the MLG is located closely to the truck, such a fixture provides a convenient means for lifting and transporting the MLG, *e.g*., by means of a forklift, over moderate distances, and since it is capable of coupling both translational forces and turning moments to the MLG, is also well suited for use by a loader in effecting the above-described types of translations and rotations of the MLG.

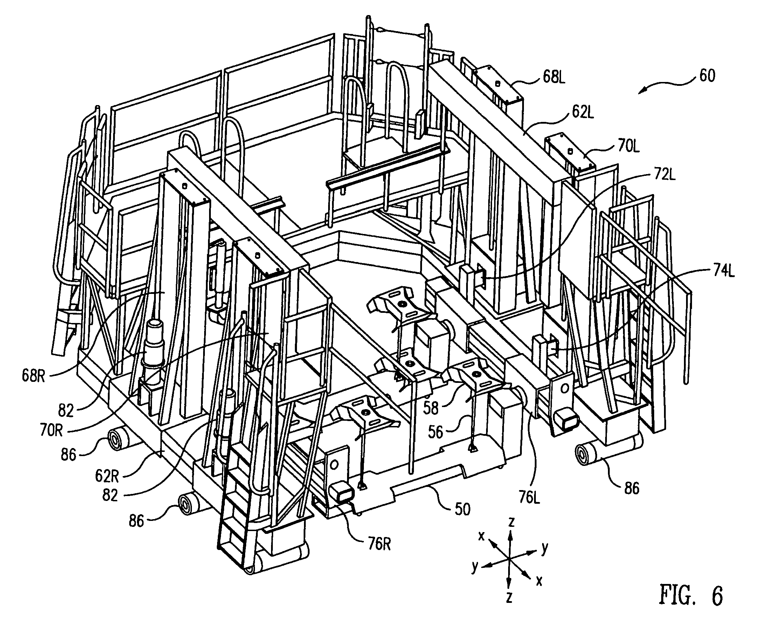

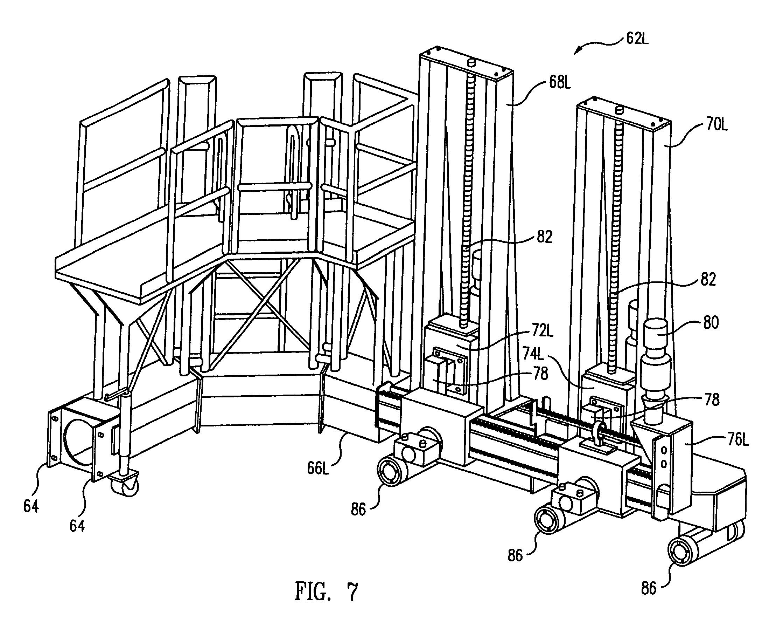

An exemplary embodiment of a MLG loader 60 is illustrated in the perspective view of Fig. 6, and comprises two generally symmetrical L-shaped "half-units," viz., a left- hand half-unit 62L and a right-hand half-unit 62R, which are respectively disposed on opposite sides of the sagittal plane of the MLG (omitted for clarity). The half-units are coupled to each other and the coupling fixture 50 across the sagittal plane of the MLG via two sets of alignment pins 64 (see Fig. 7) located at their respective centers to form a single, generally U shaped apparatus that engages the MLG through the agency of the coupling fixture 50 for the lifting and manipulation of the MLG in the above four degrees of movement.

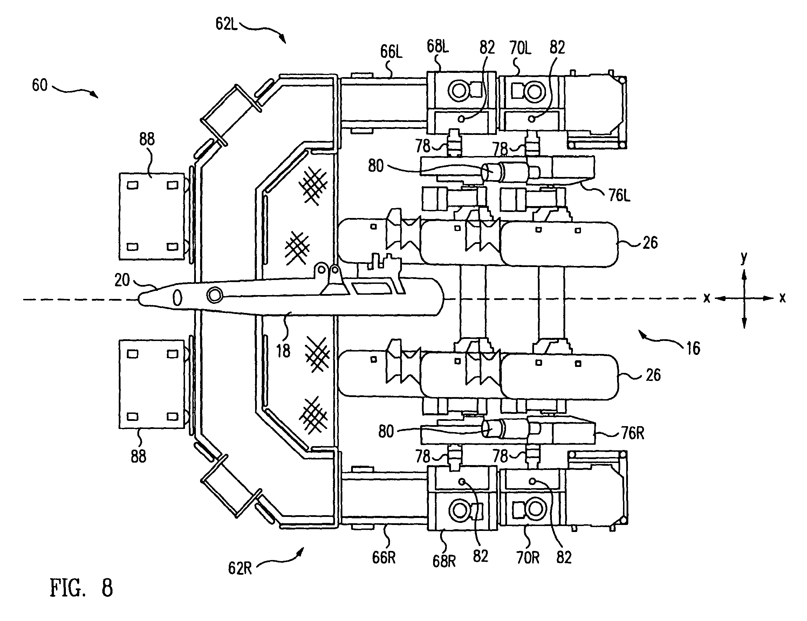

As illustrated in Fig. 7 (showing the left-hand L-shaped half-unit 62L), the bilateral half-units 62L and 62R of the loader 60 each comprises a rigid, L-shaped support frame 66L or 66R, one of a laterally opposing pair of vertical jacks 68L or 68R that is fixedly attached to a corresponding one of the opposing support frame portions, and one of a second pair of laterally opposing vertical jacks 70L or 70R that is mounted on a rail system on the corresponding support frame side portion such that the second pair of jacks is movable on the support frame in the x, or fore-and-aft direction, toward and away from the fixed first pair of jacks. Each of the jacks has a base end supported on the support frame and an opposite, vertically extendible output end 72L, 72R and 74L, 74R. A pair of slide mechanisms 76L and 76R are respectively attached to each of the L-shaped loader half-units, and in turn, engage the coupling fixture 50 on opposite sides thereof, as illustrated in Fig. 6. The horizontal slides cooperate with each other and the coupling fixture to define a single, translatable and rotatable platform that enables the loader to manipulate the MLG both in translation and rotation in the sagittal plane of the MLG, as indicated by the dashed line of Fig. 8, and relative to the support frame, *i.e*., in the x, z and ⊝_{y} directions, respectively, in the following manner.

As illustrated in, *e.g.*, the top plan view of Fig. 8, respective, opposite end portions of each of the slide mechanisms 76L and 76R of each L-shaped half-unit 62 is rotatably coupled to a corresponding one of the output ends 72, 74 of the jacks 68, 70 by means of a foot-block assembly 78 so as to be rotatable relative to the respective jack assemblies, and is also slidably mounted on rollers on the respective slide mechanisms for translational movement in the sagittal plane and relative to the respective jacks, as may be required, for example, to clear the lip of the aircraft wheel well 22 or other structures when the MLG 16 is rotated. Each of the two foot-block assemblies of each slide mechanism is thus capable of rotation, and has a respective axial position relative to the other foot-block mechanism that is adjustable in the following manner.

Each foot-block assembly 78 is positionable on a horizontal rail of a respective one of the slide mechanisms 76 by means of a 10-ton (9.07 tonnes) ball-screw linear actuator 80 driven by a one-horsepower electric motor equipped with a C-face braking mechanism. The electric motor is connected to an inline gear box having a 5:1 gear ratio mounted to a bracket and coupled to the ball-screw actuator. The actuator ball screw nut is attached to the foot-block assembly by means of a bracket. A first, or forward one, of the two foot-block assemblies of each bilateral slide mechanism is adjusted by positioning it manually on the rails of the slide mechanism to align with the MLG coupling fixture 50 described above when the loader 60 is initially coupled to the MLG 16, whereas, the aft one of the foot-blocks of each slide mechanism is allowed to float freely on the rail of the slide mechanism. The forward foot/block assembly is then positioned and controlled by the electric drive motor of the linear actuator. Thus, when the motor drives the primary foot-block of a respective slide mechanism, it simultaneously controls translational movement of both of the aft foot-blocks and the fixture, and hence, the translational movement of the MLG in the sagittal plane. The respective slide mechanisms 78 of the two L-shaped half-units 62L and 62R thus translate simultaneously and coextensively with each other to translate the MLG 16 in the sagittal plane relative to the U-shaped support frame 66, regardless of the rotational position of ⊝_{y} of the MLG in the sagittal plane, which is controlled by the loader in the following manner.

In the exemplary embodiment of the loader 60 illustrated, each of the two pairs of opposing vertical jacks 68, 70 comprises a one-horsepower (746 kW) electric motor with a C-face brake that attaches to an in-line helical box having a 5:1 gear ratio. The gear box attaches to a miter gear box having a 1:1 gear ratio, which in turn, attaches to a 20 ton (18.14 tonnes) ball-screw mechanism 82. The screw nut of the ball-screw mechanism is restrained from rotating by fixing it, *e.g*., by means of a weldment on a respective slide mechanism 76, and is attached to a respective one of the two block feet 78 of a respective slide mechanism. In one exemplary embodiment, the maximum stroke or extension of the jack ball screw mechanisms, and hence, the output ends 72, 74 of the jacks, is adjusted to be about 65 inches (1.65m). However, the stroke can be extended for use of the loader in, *e.g*., a flight line environment in which a greater stroke may be required.

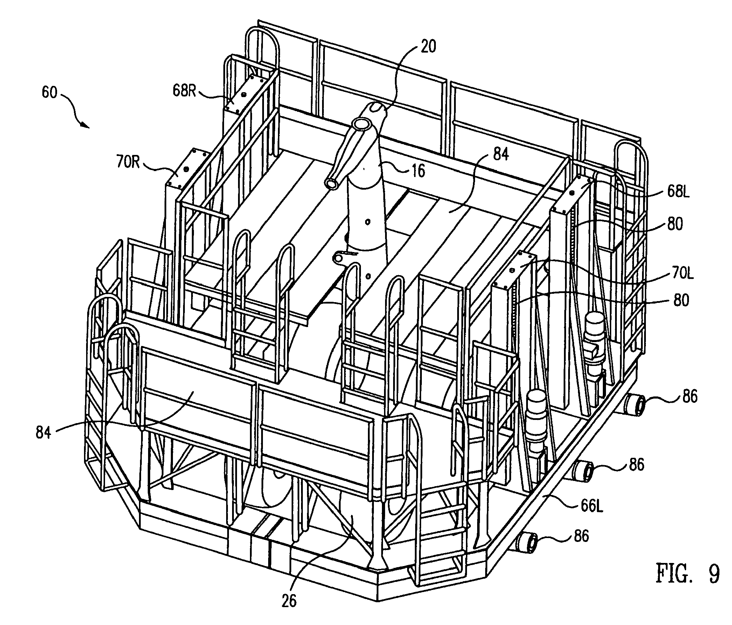

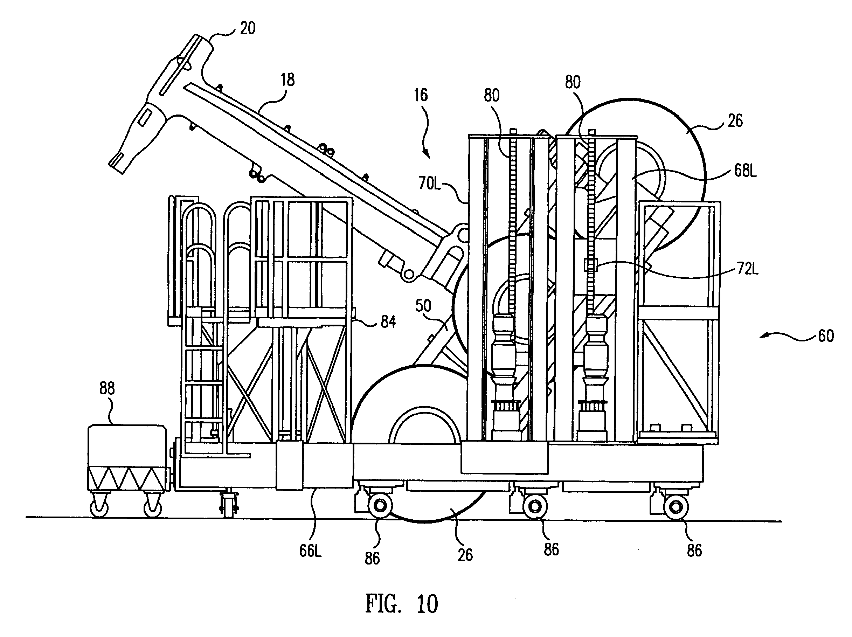

The vertical position of the MLG 16, as well as its rotational position ⊝_{y} in the sagittal plane and relative to the support frame 66, is thus controlled by the vertical stroke of the four jacks 68, 70 acting in concert, in the case of the vertical position of the MLG 16, or in concerted, opposing pairs, *i.e*., the front, or forward opposing pair 70L and 70R moving in concert with each other, and/or the aft, or rearward pair 68L and 68R moving in concert with each other and independently of the front pair. Thus, if the MLG is loaded onto the loader 60 with the strut end 20 extending forward relative to the loader, as illustrated in the front-and-left side perspective view of Fig. 9, wherein the MLG is shown surrounded on all sides by a plurality of elevated scaffolds, or work platforms 84 of the loader, the strut end can be rotated in a rearward direction by simultaneously and coextensively raising the output ends 74L and 74R of the front opposing pair of jacks 70L and 70R relative to the output ends 72L and 72R of the aft pair of jacks 68L and 68R, and/or by lowering the output ends of the aft pair relative to the front pair, and if the strut end of the MLG is initially oriented in a rearward direction relative to the loader, as illustrated in the right-side elevation view of Fig. 10, the strut end can be rotated in a forward direction by raising the rearward pair of jacks in concert and/or by retracting the forward pair in concert. As the MLG rotates, the moveable pair of opposing jacks slide axially on the support frame relative to the fixed pair to accommodate the changing horizontal distance between the respective fore and aft foot-block assemblies 78 of the slide mechanisms 76 as they are rotated by the jacks. The initial MLG orientation selected will depend on whether it is desirable to approach the wheel well 22 of the aircraft 10 with the MLG strut 18 from the front or the aft end of the aircraft. The exemplary loader illustrated and described herein is capable of rotating the MLG at an inclination of at least 60 degrees relative to the horizon, with the strut of the MLG strut initially oriented in the aft direction, or an inclination of 52 degrees, with the MLG strut initially oriented in the forward direction. In the preferred embodiment, the latter procedure is typically followed because there fewer operations involved in the installation of the MLG into the aircraft.

In a preferred embodiment, the loader 60 is driven over the ground by a drive mechanism comprising six, synchronized, steerable, nine-inch (22.9cm) dual-wheel assemblies 86, each equipped with an electric servo drive. The drive mechanism enables an operator of the loader to precisely control the x and y positions of the loader, and hence, the MLG, relative to the wheel well 22 of the aircraft 10 from outside of the aircraft using, *e.g*., a control console located on the loader, or a control "pendant," *i.e*., a control pad attached to the loader by an electric cord (preferably, one which is UL rated for Class 1, Division 2, *i.e*., a flight line environment), or alternatively, by a wireless RF connection. As those of skill in the art will appreciate, the drive mechanism also provides the loader with an additional degree of rotational control, namely, the ability to rotate in the horizontal plane ("⊝_{z}"), *i.e.*, about the vertical z axis. The total weight of the MLG Loader is distributed over the wheels of the drive mechanism such that the bearing weight of the fully burdened loader does not exceed a rated floor load of 450 PSI (31 bar). In the exemplary embodiment of the loader 60 illustrated in the figures, the total weight of the loader is about 26,000 lbs. (11,793kg), and its overall dimensions are 190 inches (4.83m) long X 194 inches (4.93m) wide X 120 inches (3.05m) high.

In one advantageous embodiment, the MLG loader 60 is provided with a pair of battery carts 88 (see Figs. 8 and 10) that respectively attach to the back end of each of the right- and left-hand L-shaped half-units 62L and 62R of the loader. The battery packs power the electric motors of the jacks 68 and 70 and the slide mechanisms 76 as well as the variable frequency drive wheels 86 of the loader. Each of the battery carts can be replaced with a backup battery cart when recharging is necessary. The battery carts, like the control pendant described above, are designed to meet UL requirements for Class 1, Division I and 2, while operating in the vicinity of a fueled aircraft, and enable the loader to move freely along the assembly line for up to eight hours without recharging. However, if desired, a secondary power source, such as an electric extension cord or a generator cart, can be used for redundancy.

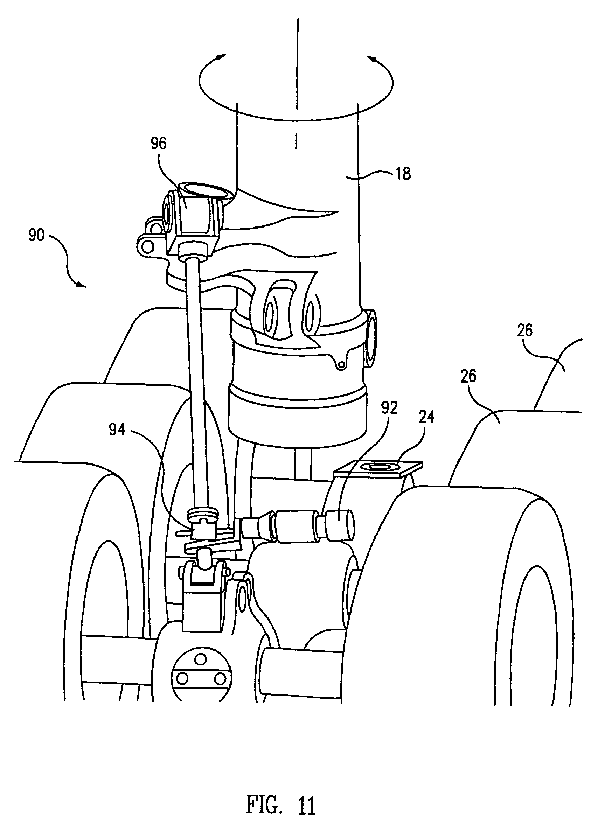

Fig. 11 illustrates an optional mechanism 90 that can be used advantageously in conjunction with the exemplary loader 60. The tool, a strut/truck MLG drive assembly, comprises a ball-screw linear actuator 92 having an electric motor and-C face brake attached. A ball-screw worm drive mounting plate 94 is connected to a fitting on the MLG truck 24, and an attachment fitting 96 is located at the opposite end of the actuator and connects to the strut 18 by means of a bushing that enables the strut to rotate freely about the long axis of the strut in either direction relative to the truck without binding when the drive assembly is actuated. This angular adjustment of the strut relative to the truck can be accomplished using the same control pendant that controls the movements of the loader and its features. In use, the tool enables the strut of the MLG, and in particular, fittings at the upper end 20 thereof, to be rotated relative to the truck of the MLG and thereby enable a fine positioning of the fittings with respect to associated structures in the wheel well 22 during the marriage of the MLG to the aircraft 10.

The method used for attaching the exemplary loader 60 to the MLG 16, and thence, the MLG to the aircraft 10, is as follows. The MLG is initially provided at the location of the loader, *e.g*., with a forklift, with the shipping fixture 50 already coupled to the wheels 26 of the MLG truck 24. The two L-shaped half-units 62L and 62R of the loader are then moved toward each other across the sagittal plane of the MLG until opposing fingers on respective ones of the slider assemblies 76L and 76R engage in respective openings on opposite sides of the fixture. The two L-shaped units are then locked together such that the slider mechanisms, together with the fixture, define a single platform coupled to the MLG that can be raised, lowered, horizontally traversed, and rotated about two axes of rotation, through control of the loader.

The operator of the loader 60, while positioned, for example aboard the loader on one of the work platforms 84 thereof, or remotely from the loader, can then steer the loader and MLG into position under the wing of the aircraft 10 at the position of the desired well 22, and using the control pendant, manipulate the MLG up into the wheel well without causing any interference between the MLG and the airplane wing or any auxiliary working or support stands that provide access and/or support of the airplane on the moving assembly line.

By now, those of skill in this art will appreciate that many modifications, substitutions and variations can be made in and to the materials, apparatus, configurations and methods of the present invention without departing from the scope of protection conferred by the accompanying claims. For example, in an appropriate situation, hydraulic linear actuators can be substituted for one or more of the electrical ball-screw linear actuators illustrated and described herein. Accordingly, the scope of the present invention should not be limited to that of the particular embodiments illustrated and described herein, as they are only exemplary in nature, but rather, should be fully commensurate with the scope of protection conferred by the claims.

## Claims

1. Apparatus (60) for loading and unloading the main landing gear (16) the so called MLG of an aircraft (10), comprising:
a fixture (50) for coupling to the MLG (16) such that axial forces and turning moments applied to the fixture (50) are coupled through the fixture (50) to the MLG (16);
means for controllably translating the fixture (50) in at least a sagittal plane of the MLG (16) when the fixture (50), in use, is coupled to the MLG (16); and
means for controllably rotating the fixture (50) in the sagittal plane,
wherein the means for controllably translating the fixture (50) in the sagittal plane comprises:
a support frame (66) having opposing portions (66L, 66R) disposed on opposite sides of the sagittal plane;
a pair of opposing slide mechanisms (76L, 76R), each coupled to an opposite side of the fixture (50) and supported on a corresponding one of the support frame side portions (66L, 66R) for simultaneous, coextensive sliding movement in the sagittal plane and relative to the support frame (66); and
means for urging the slide mechanisms (76L, 76R) in simultaneous, coextensive translational movement,
**characterised in that** the means for controllably rotating the fixture (50) in the sagittal plane comprises:
first (68L, 68R) and second (70L, 70R) pairs of opposing vertical jacks, each pair having a jack supported on a corresponding one of the support frame side portions (66L, 66R), the first pair (68L, 68R) being fixed relative to the support frame (66) and the second pair (70L, 70R) being axially moveable on the support frame (66) relative to the first pair (68L, 68R);
means for rotatably coupling opposite ends of each slide mechanism (76L, 76R) to an output end (72L, 72R, 74L, 74R) of a corresponding one of the jacks of each of the first (68L, 68R) and second (70L, 70R) pairs of jacks; and
means for controllably raising and lowering the output ends (72L, 72R, 74L, 74R) of the jacks of each opposing pair of jacks simultaneously, coextensively and independently of those of the other pair.

2. The apparatus (60) of claim 1, wherein the urging means comprises a ball-screw or a hydraulic linear actuator.

3. The apparatus (60) of claim 1, wherein the raising and lowering means comprises a ball-screw or a hydraulic linear actuator.

4. The apparatus (60) of claim 1, further comprising means for controllably rotating and translating the fixture (50) in a horizontal plane.

5. The apparatus (60) of claim 4, wherein the means for controllably rotating and translating the fixture (50) in the horizontal plane comprises a drive mechanism coupled to the support frame (66), the drive mechanism including a plurality of synchronized, steerable wheels, each equipped with an independently controllable servo drive mechanism.

6. The apparatus (60) of claim 1, wherein when the MLG (16) comprises a truck (24) and an elongated strut (18) having a central axis, and the apparatus further comprises means for rotating the strut (18) about the central axis and relative to the truck (24).

7. The apparatus (60) of claim 6, wherein the strut rotating means comprises a ball-screw or a hydraulic linear actuator coupled between the strut (18) and the truck (24).

8. The apparatus (60) of claim 1, wherein the support frame (66) is U-shaped and the opposing portions comprise two symmetrical, L-shaped half-units (66L, 66R).

9. A method for loading a main landing gear (16) the so called MLG of an aircraft (10), the method comprising:
coupling a fixture (50) to the MLG (16) such that both axial forces and turning moments applied to the fixture (50) are coupled through the fixture (50) to the MLG (16);
controllably translating the fixture (50) in at least one of a horizontal plane and a sagittal plane of the MLG (16) until an upper end of a strut (18) of the MLG (16) is aligned with a wheel well (22) of the aircraft (10); and
controllably rotating the fixture (50) in at least one of the sagittal plane and a horizontal plane until the upper end of the strut (18) is disposed within the wheel well (22),
wherein controllably translating the fixture (50) comprises:
disposing opposing portions of a support frame (66) on opposite sides of the sagittal plane;
coupling each of a pair of opposing slide mechanisms (76L, 76R) to an opposite side of the fixture (50) and supporting each of the pair of opposing slide mechanisms (76L, 76R) on a corresponding one of the support frame side portions (66L, 66R) for simultaneous, coextensive sliding movement in the sagittal plane and relative to the support frame (66); and
urging the slide mechanisms (76L, 76R) in simultaneous, coextensive translational movement,
**characterised in that** controllably rotating the fixture (50) comprises:
supporting a jack of each of first (68L, 68R) and second (70L, 70R) pairs of opposing vertical jacks on a corresponding one of the support frame side portions (66L, 66R);
fixing the first pair (68L, 68R) of opposing vertical jacks relative to the support frame (66);
axially moving the second pair (70L, 70R) of opposing vertical jacks on the support frame (66) relative to the first pair (68L, 68R);
rotatably coupling opposite ends of each slide mechanism (76L, 76R) to an output end (72L, 72R, 74L, 74R) of a corresponding one of the jacks of each of the first (68L, 68R) and second (70L, 70R) pairs of jacks; and
controllably raising and lowering the output ends (72L, 72R, 74L, 74R) of the jacks of each opposing pair of jacks simultaneously, coextensively and independently of those of the other pair.

10. The method of claim 9, wherein:
the MLG (16) comprises an elongated strut (18) having a truck (24) attached thereto, the truck (24) including a plurality of wheels; and the method further comprises:
coupling the fixture (50) to the MLG (16) comprises coupling the fixture (50) to the wheels of the MLG (16).

11. The method of claim 9, wherein controllably translating the fixture (50) further comprises:
supporting the fixture (50) on the support frame (66), the support frame (66) having a drive mechanism coupled thereto, the drive mechanism including a plurality of synchronizable, steerable wheels, each equipped with an independently controllable servo drive mechanism; and
controllably translating the support frame (66) in the horizontal plane using the drive mechanism.

12. The method of claim 9, wherein controllably rotating the fixture (50) further comprises:
supporting the fixture (50) on the support frame (66), the support frame (66) having a drive mechanism coupled thereto, the drive mechanism including a plurality of synchronizable, steerable wheels, each equipped with an independently controllable servo drive mechanism; and
controllably rotating the support frame (66) in the horizontal plane using the drive mechanism.

13. The method of claim 9, wherein the MLG (16) comprises a truck (24) and an elongate strut (18) having a central axis, the method further comprising rotating the strut (18) about the central axis and relative to the truck (24).

## Patentansprüche

1. Vorrichtung (60) zum Laden und Entladen des Hauptfahrwerks (16), des so genannten MLG (main landing gear), eines Luftfahrzeugs (10), mit
einer Montagevorrichtung (50) zur Verbindung mit dem MLG (16), so dass auf die Montagevorrichtung (50) aufgebrachte Axialkräfte und Drehmomente über die Montagevorrichtung (50) an das MLG (16) angelegt werden;
einem Mittel zum kontrollierbaren Verschieben der Montagevorrichtung (50) zumindest in einer Sagittalebene des MLG (16), wenn die Montagevorrichtung (50) bei Gebrauch mit dem MLG (16) verbunden ist; und
einem Mittel zum kontrollierbaren Drehen der Montagevorrichtung (50) in der Sagittalebene;
wobei das Mittel zum kontrollierbaren Verschieben der Montagevorrichtung (50) in der Sagittalebene aufweist:
einen Tragrahmen (66) mit auf gegenüberliegenden Seiten der Sagittalebene angeordneten, gegenüberliegenden Teilen (66L, 66R);
ein Paar gegenüberliegende Gleitmechanismen (76L, 76R), die jeweils mit einer gegenüberliegenden Seite der Montagevorrichtung (50) verbunden und auf einem entsprechenden Seitenteil (66L, 66R) des Tragrahmens für eine gleichzeitige, koextensive Gleitbewegung in der Sagittalebene relativ zum Tragrahmen (66) abgestützt sind; und
ein Mittel zum Antreiben der Gleitmechanismen (76L, 76R) zu einer gleichzeitigen, koextensiven Translationsbewegung;
**dadurch gekennzeichnet, dass** das Mittel zum kontrollierbaren Drehen der Montagevorrichtung (50) in der Sagittalebene aufweist:
ein erstes (68L, 68R) und ein zweites (70L, 70R) Paar gegenüberliegende vertikale Hubeinheiten, wobei jedes Paar eine Hubeinheit auf einem entsprechenden Seitenteil (66L, 66R) des Trag-rahmens abgestützt hat, wobei das erste Paar (68L, 68R) relativ zum Tragrahmen (66) fest montiert ist und das zweite Paar (70L, 70R) auf dem Tragrahmen (66) relativ zu dem ersten Paar (68L, 68R) axial beweglich ist;
ein Mittel zur drehbaren Verbindung gegenüberliegender Enden jedes Gleitmechanismus (76L, 76R) mit einem Ausgangsende (72L, 72R, 74L, 74R) einer entsprechenden Hubeinheit des ersten (68L, 68R) bzw. des zweiten (70L, 70R) Paars Hubeinheiten; und
ein Mittel zum kontrollierbaren Heben und Senken der Ausgangsenden (72L, 72R, 74L, 74R) der Hubeinheiten jedes gegenüberliegenden Paars Hubeinheiten gleichzeitig, koextensiv und unabhängig von jenen des anderen Paars.

2. Vorrichtung (60) nach Anspruch 1, wobei das Antriebsmittel einen Kugelumlaufspindelantrieb oder einen hydraulischen Linearantrieb aufweist.

3. Vorrichtung (60) nach Anspruch 1, wobei das Hebe- und Senkmittel einen Kugelumlaufspindelantrieb oder einen hydraulischen Linearantrieb aufweist.

4. Vorrichtung (60) nach Anspruch 1, weiters mit einem Mittel zum kontrollierbaren Drehen und Verschieben der Montagevorrichtung (50) in einer horizontalen Ebene.

5. Vorrichtung (60) nach Anspruch 4, wobei das Mittel zum kontrollierbaren Drehen und Verschieben der Montagevorrichtung (50) in der horizontalen Ebene einen mit dem Tragrahmen (66) verbundenen Antriebsmechanismus aufweist, welcher Antriebsmechanismus eine Mehrzahl von synchronisierten, steuerbaren Rädern enthält, die jeweils mit einem unabhängig steuerbaren Servoantriebsmechanismus ausgestattet sind.

6. Vorrichtung (60) nach Anspruch 1, wobei das MLG (16) einen Unterwagen (24) und eine längliche Stütze (18) mit einer Mittelachse aufweist, und wobei die Vorrichtung weiters ein Mittel zum Drehen der Stütze (18) um die Mittelachse relativ zum Unterwagen (24) aufweist.

7. Vorrichtung (60) nach Anspruch 6, wobei das Stützendrehmittel einen Kugelumlaufspindelantrieb oder einen hydraulischen Linearantrieb aufweist, welcher zwischen der Stütze (18) und dem Unterwagen (24) montiert ist.

8. Vorrichtung (60) nach Anspruch 1, wobei der Tragrahmen (66) U-förmig ausgebildet ist und die gegenüberliegenden Teile zwei symmetrische, L-förmige Halbeinheiten (66L, 66R) aufweisen.

9. Verfahren zum Laden und Entladen eines Hauptfahrwerks (16), des so genannten MLG (main landing gear), eines Luftfahrzeugs (10), welches Verfahren umfasst:
Verbinden einer Montagevorrichtung (50) mit dem MLG (16), so dass sowohl Axialkräfte als auch Drehmomente, die auf die Montagevorrichtung (50) aufgebracht werden, über die Montagevorrichtung (50) an das MLG (16) angelegt werden;
kontrollierbares Verschieben der Montagevorrichtung (50) in einer horizontalen Ebene und/oder einer Sagittalebene des MLG (16), bis das oberen Ende einer Stütze (18) des MLG (16) mit einem Radschacht (22) des Luftfahrzeugs (10) fluchtet; und
kontrollierbares Drehen der Montagevorrichtung (50) in der Sagittalebene und/oder einer horizontalen Ebene, bis das obere Ende der Stütze (18) im Radschacht (22) angeordnet ist;
wobei das kontrollierbare Verschieben der Montagevorrichtung (50) umfasst:
Anordnen gegenüberliegender Teile eines Tragrahmens (66) auf gegenüberliegenden Seiten der Sagittalebene;
Verbinden jedes Gleitmechanismus eines Paars gegenüberliegender Gleitmechanismen (76L, 76R) mit einer gegenüberliegenden Seite der Montagevorrichtung (50) und Abstützen jedes Gleit-mechanismus des Paars gegenüberliegender Gleitmechanismen (76L, 76R) auf einem entsprechenden Seitenteil (66L, 66R) des Tragrahmens für eine gleichzeitige, koextensive Gleitbewegung in der Sagittalebene und relativ zum Tragrahmen (66); und
Antreiben der Gleitmechanismen (76L, 76R) zu einer gleichzeitigen, koextensiven Translationsbewegung;
**dadurch gekennzeichnet, dass** das kontrollierbare Drehen der Montagevorrichtung (50) umfasst:
Abstützen einer Hubeinheit jeweils eines ersten (68L, 68R) und eines zweiten (70L, 70R) Paars gegenüberliegender vertikaler Hubeinheiten auf einem entsprechenden Seitenteil (66L, 66R) des Tragrahmens;
Befestigen des ersten Paars (68L, 68R) gegenüberliegender vertikaler Hubeinheiten relativ zum Tragrahmen (66);
axiales Bewegen des zweiten Paars (70L, 70R) gegenüberliegender vertikaler Hubeinheiten auf dem Tragrahmen (66) relativ zu dem ersten Paar (68L, 68R);
drehbares Verbinden gegenüberliegender Enden jedes Gleit-mechanismus (76L, 76R) mit einem Ausgangsende (72L, 72R, 74L, 74R) einer entsprechenden Hubeinheit jeweils des ersten (68L, 68R) und des zweiten (70L, 70R) Paars Hubeinheiten; und
kontrollierbares Heben und Senken der Ausgangsenden (72L, 72R, 74L, 74R) der Hubeinheiten jedes gegenüberliegenden Paars Hubeinheiten gleichzeitig, koextensiv und unabhängig von jenen des anderen Paars.

10. Verfahren nach Anspruch 9, wobei das MLG (16) eine längliche Stütze (18) mit einem daran angebrachten Unterwagen (24) aufweist, welcher Unterwagen (24) eine Mehrzahl von Rädern enthält; wobei das Verfahren weiters umfasst, dass das Verbinden der Montagevorrichtung (50) mit dem MLG (16) das Kuppeln der Montagevorrichtung (50) mit den Rädern des MLG (16) umfasst.

11. Verfahren nach Anspruch 9, wobei das kontrollierbare Verschieben der Montagevorrichtung (50) weiters umfasst:
Abstützen der Montagevorrichtung (50) auf dem Tragrahmen (66), welcher Tragrahmen (66) einen damit gekoppelten Antriebsmechanismus aufweist, wobei der Antriebsmechanismus eine Mehrzahl von synchronisierbaren, steuerbaren Rädern enthält, die jeweils mit einem unabhängig steuerbaren Servoantriebsmechanismus ausgestattet sind; und
kontrollierbares Verschieben des Tragrahmens (66) in der horizontalen Ebene unter Verwendung des Antriebsmechanismus.

12. Verfahren nach Anspruch 9, wobei das kontrollierbare Drehen der Montagevorrichtung (50) weiters umfasst:
Abstützen der Montagevorrichtung (50) auf dem Tragrahmen (66), welcher Tragrahmen (66) einen damit gekoppelten Antriebsmechanismus aufweist, wobei der Antriebsmechanismus eine Mehrzahl von synchronisierbaren, steuerbaren Rädern enthält, die jeweils mit einem unabhängig steuerbaren Servoantriebsmechanismus ausgestattet sind; und
kontrollierbares Drehen des Tragrahmens (66) in der horizontalen Ebene unter Verwendung des Antriebsmechanismus.

13. Verfahren nach Anspruch 9, wobei das MLG (16) einen Unterwagen (24) und eine längliche Stütze (18) mit einer Mittelachse aufweist, wobei das Verfahren weiters das Drehen der Stütze (18) um die Mittelachse relativ zum Unterwagen (24) umfasst.

## Revendications

1. Appareil (60) pour faire rentrer et faire sortir le train d'atterrissage principal (16), appelé MLG (« Main Landing Gear »), d'un aéronef (10), comprenant :
une fixation (50) pour l'accouplement avec le MLG (16) de sorte que des forces axiales et des moments de rotation appliqués sur la fixation (50) soient accouplés, par l'intermédiaire de la fixation (50), avec le MLG (16) ;
des moyens pour translater, de façon pouvant être commandée, la fixation (50) dans au moins un plan sagittal du MLG (16) lorsque la fixation (50), durant l'utilisation, est accouplée avec le MLG (16) ; et
des moyens pour faire tourner, de façon pouvant être commandée, la fixation (50) dans le plan sagittal,
dans lequel les moyens pour translater, de façon pouvant être commandée, la fixation (50) dans le plan sagittal comprennent :
un cadre de support (66) comportant des parties opposées (66L, 66R) disposées sur des côtés opposés du plan sagittal ;
une paire de mécanismes coulissants opposés (76L, 76R), chacun accouplé avec un côté opposé de la fixation (50) et supporté sur une partie correspondante parmi les parties latérales de cadre de support (66L, 66R) pour un mouvement de coulissement coextensif simultané dans le plan sagittal et par rapport au cadre de support (66) ; et
des moyens pour pousser les mécanismes coulissants (76L, 76R) dans un mouvement de translation coextensif simultané,
**caractérisé en ce que** les moyens pour faire tourner, de façon pouvant être commandée, la fixation (50) dans le plan sagittal comprennent :
des première (68L, 68R) et seconde (70L, 70R) paires de vérins verticaux opposés, chaque paire comportant un vérin supporté sur une partie correspondante parmi les parties latérales de cadre de support (66L, 66R), la première paire (68L, 68R) étant fixe par rapport au cadre de support (66) et la seconde paire (70L, 70R) étant axialement mobile sur le cadre de support (66) par rapport à la première paire (68L, 68R) ;
des moyens pour accoupler de façon rotative des extrémités opposées de chaque mécanisme coulissant (76L, 76R) avec une extrémité de sortie (72L, 72R, 74L, 74R) d'un vérin correspondant parmi les vérins de chacune des première (68L, 68R) et seconde (70L, 70R) paires de vérins ; et
des moyens pour élever et abaisser, de façon pouvant être commandée, les extrémités de sortie (72L, 72R, 74L, 74R) des vérins de chaque paire opposée de vérins simultanément, de façon coextensive et indépendamment de ceux de l'autre paire.

2. Appareil (60) selon la revendication 1, dans lequel les moyens de poussée comprennent une vis sphérique ou un actionneur linéaire hydraulique.

3. Appareil (60) selon la revendication 1, dans lequel les moyens d'élévation et d'abaissement comprennent une vis sphérique ou un actionneur linéaire hydraulique.

4. Appareil (60) selon la revendication 1, comprenant en outre des moyens pour faire tourner et translater, de façon pouvant être commandée, la fixation (50) dans un plan horizontal.

5. Appareil (60) selon la revendication 4, dans lequel les moyens pour faire tourner et translater, de façon pouvant être commandée, la fixation (50) dans le plan horizontal comprennent un mécanisme d'entraînement accouplé avec le cadre de support (66), le mécanisme d'entraînement comprenant une pluralité de roues orientables synchronisées, chacune équipée d'un mécanisme de servocommande pouvant être commandé indépendamment.

6. Appareil (60) selon la revendication 1, dans lequel, lorsque le MLG (16) comprend un chariot (24) et une jambe allongée (18) possédant un axe central, et l'appareil comprend en outre des moyens pour faire tourner la jambe (18) autour de l'axe central et par rapport au chariot (24).

7. Appareil (60) selon la revendication 6, dans lequel les moyens de rotation de jambe comprennent une vis sphérique ou un actionneur linéaire hydraulique accouplé entre la jambe (18) et le chariot (24).

8. Appareil (60) selon la revendication 1, dans lequel le cadre de support (66) présente une forme en U et les parties opposées comprennent deux demi-unités symétriques en forme de L (66L, 66R).

9. Procédé pour faire rentrer un train d'atterrissage principal (16), appelé MLG (« Main Landing Gear »), d'un aéronef (10), le procédé comprenant :
l'accouplement d'une fixation (50) avec le MLG (16) de sorte que des forces axiales ainsi que des moments de rotation appliqués sur la fixation (50) soient accouplés, par l'intermédiaire de la fixation (50), avec le MLG (16) ;
la translation pouvant être commandée de la fixation (50) dans au moins un plan parmi un plan horizontal et un plan sagittal du MLG (16) jusqu'à ce qu'une extrémité supérieure d'une jambe (18) du MLG (16) soit alignée avec un logement de train (22) de l'aéronef (10) ; et
la rotation pouvant être commandée de la fixation (50) dans au moins un plan parmi le plan sagittal et un plan horizontal jusqu'à ce que l'extrémité supérieure de la jambe (18) soit disposée à l'intérieur du logement de train (22),
dans lequel la translation pouvant être commandée de la fixation (50) comprend :
la disposition des parties opposées d'un cadre de support (66) sur des côtés opposés du plan sagittal ;
l'accouplement de chacun parmi une paire de mécanismes coulissants opposés (76L, 76R) avec un côté opposé de la fixation (50) et le support de chacun parmi la paire de mécanismes coulissants opposés (76L, 76R) sur une partie correspondante parmi les parties latérales de cadre de support (66L, 66R) pour un mouvement de coulissement coextensif simultané dans le plan sagittal et par rapport au cadre de support (66) ; et
la poussée des mécanismes coulissants (76L, 76R) dans un mouvement de translation coextensif simultané,
**caractérisé en ce que** la rotation pouvant être commandée de la fixation (50) comprend :
le support d'un vérin de chacune parmi des première (68L, 68R) et seconde (70L, 70R) paires de vérins verticaux opposés sur une partie correspondante parmi les parties latérales de cadre de support (66L, 66R) ;
la fixation de la première paire (68L, 68R) de vérins verticaux opposés par rapport au cadre de support (66) ;
le déplacement axial de la seconde paire (70L, 70R) de vérins verticaux opposés sur le cadre de support (66) par rapport à la première paire (68L, 68R) ;
l'accouplement rotatif d'extrémités opposées de chaque mécanisme coulissant (76L, 76R) avec une extrémité de sortie (72L, 72R, 74L, 74R) d'un vérin correspondant parmi les vérins de chacune des première (68L, 68R) et seconde (70L, 70R) paires de vérins ; et
l'élévation et l'abaissement pouvant être commandés des extrémités de sortie (72L, 72R, 74L, 74R) des vérins de chaque paire opposée de vérins simultanément, de façon coextensive et indépendamment de ceux de l'autre paire.

10. Procédé selon la revendication 9, dans lequel :
le MLG (16) comprend une jambe allongée (18) comportant un chariot (24) fixé à celle-ci, le chariot (24) comprenant une pluralité de roues ; et le procédé comprend en outre :
l'accouplement de la fixation (50) avec le MLG (16) comprend l'accouplement de la fixation (50) avec les roues du MLG (16).

11. Procédé selon la revendication 9, dans lequel la translation pouvant être commandée de la fixation (50) comprend en outre :
le support de la fixation (50) sur le cadre de support (66), le cadre de support (66) comportant un mécanisme d'entraînement accouplé avec celui-ci, le mécanisme d'entraînement comprenant une pluralité de roues orientables pouvant être synchronisées, chacune équipée d'un mécanisme de servocommande pouvant être commandé indépendamment ; et
la translation pouvant être commandée du cadre de support (66) dans le plan horizontal en utilisant le mécanisme d'entraînement.

12. Procédé selon la revendication 9, dans lequel la rotation pouvant être commandée de la fixation (50) comprend en outre :
le support de la fixation (50) sur le cadre de support (66), le cadre de support (66) comportant un mécanisme d'entraînement accouplé avec celui-ci, le mécanisme d'entraînement comprenant une pluralité de roues orientables pouvant être synchronisées, chacune équipée d'un mécanisme de servocommande pouvant être commandé indépendamment ; et
la rotation pouvant être commandée du cadre de support (66) dans le plan horizontal en utilisant le mécanisme d'entraînement.

13. Procédé selon la revendication 9, dans lequel le MLG (16) comprend un chariot (24) et une jambe allongée (18) possédant un axe central, le procédé comprenant en outre la rotation de la jambe (18) autour de l'axe central et par rapport au chariot (24).
